# FASCICULE DE BREVET EUROPEEN

(11) **EP 2 932 206 B1**
(45) Date de publication et mention de la délivrance du brevet: **27.03.2019**
(21) Numéro de dépôt: 13811844.3
(22) Date de dépôt: 11.12.2013
(51) Int. Cl.: F04B 43/02, F04B 53/10, G01F 1/05, G01K 13/02, G01F 1/684, F04B 19/00, F04B 43/04, G01F 1/692, F04B 53/16

(54) **POMPE EQUIPEE D'UN ENSEMBLE DE MESURE DE LA TEMPERATURE OU DU DEBIT D'UN FLUIDE**
PUMPE MIT EINER ANORDNUNG ZUR MESSUNG DER TEMPERATUR ODER DER DURCHFLUSSRATE EINES FLUIDS
PUMP PROVIDED WITH AN ASSEMBLY FOR MEASURING THE TEMPERATURE OR FLOW RATE OF A FLUID

(30) Priorité: 14.12.2012 FR 1262050
(43) Date de publication de la demande: 21.10.2015
(73) Titulaire: Commissariat à l'Energie Atomique et aux Energies Alternatives, 75015 Paris (FR); Eveon, 38330 Montbonnot Saint Martin (FR)
(72) Inventeur: NICOLAS, Stephane, F-38240 Meylan (FR)
(74) Mandataire: Colombo, Michel
(86) Numéro de dépôt international: PCT/EP2013/076282
(87) Numéro de publication internationale: WO 2014/090900

(56) Documents cités:
- WO-A1-02/42723
- WO-A1-2011/133014
- DE-A1-102005 058 080
- DE-C1- 10 161 202
- US-B1- 6 527 835
- US-B1- 7 255 001

## Description

L'invention concerne une pompe incorporant un ensemble de mesure de la température ou du débit d'un fluide. L'invention a également pour objet un procédé de fabrication de cette pompe.

L'invention concerne notamment des micro-ensembles et des micro-pompes qui sont des microsystèmes.

Les microsystèmes sont, par exemple, des MEMS (Micro-ElectroMechanical Systems). Ces microsystèmes diffèrent des systèmes mécaniques macroscopiques en outre par leur procédé de fabrication. Ces microsystèmes sont réalisés en utilisant les mêmes procédés de fabrication collectifs que ceux utilisés pour réaliser les puces microélectroniques. Par exemple, les microsystèmes sont réalisés à partir de plaquettes en silicium monocristallin usinées par photolithographie et gravure (par exemple DRIE (Deep Reactive Ion Etching)) et/ou structurées par croissance épitaxiale et dépôt de matériau métallique.

Grâce à ces procédés de fabrication, les microsystèmes sont petits et présentent généralement des pièces ou parties de pièces usinées dont au moins une des dimensions est d'ordre micrométrique. La dimension d'ordre micrométrique est généralement inférieure à 200 µm et, par exemple, comprise entre 1 et 200 µm.

Des pompes connues comportent :
- un premier substrat s'étendant essentiellement dans un plan, ce substrat présentant une face,
- une cavité formée dans la face du premier substrat,
- des canaux d'admission et d'évacuation d'un fluide, formés dans la face du premier substrat,
- un second substrat présentant une face assemblée sur la face du premier substrat, cette face refermant les canaux pour former des tubes à l'intérieur desquels le fluide pompé est apte à circuler, ce second substrat comportant également au moins une membrane refermant la cavité pour former une chambre étanche au fluide, cette membrane étant déformable :
   - d'une position d'aspiration jusqu'à une position de refoulement pour refouler le fluide à l'extérieur de la chambre par l'intermédiaire du canal d'évacuation, et
   - de la position de refoulement jusqu'à la position d'aspiration pour aspirer le fluide à l'intérieur de la chambre par l'intermédiaire du canal d'admission.

Une telle pompe connue est décrite dans la demande de brevet WO2011/133014.

De l'état de la technique est également connu de :
- US6 527 835B1, DE102005058080A1,
- WO02/42723A1,
- US 7 255 001B1, et
- DE10161202C1.

Il est nécessaire de mesurer avec précision la température ou le débit du fluide pompé.

L'invention vise à proposer une telle pompe équipée d'un ensemble de mesure de la température ou du débit du fluide pompé tout en conservant la simplicité de fabrication de cette pompe. Elle a donc pour objet une pompe conforme à la revendication 1.

L'ensemble de mesure incorporé à la pompe ci-dessus permet de conserver la fabrication de la pompe par usinage et assemblage de seulement deux substrats. La pompe ci-dessus reste donc simple à fabriquer tout en incorporant un ensemble de mesure de la température ou du débit du fluide pompé.

De plus, en utilisant un matériau thermiquement isolant logé dans un caisson à l'intérieur du substrat et sur lequel est disposée la sonde de température, la sonde de température est isolée thermiquement du substrat sans avoir recours à une membrane mobile suspendue au-dessus d'une cavité vide. L'ensemble de mesure ainsi obtenue est donc plus précis que des ensembles de mesures connus car la section transversale du tube ou de la chambre traversée par le fluide ne varie pas à l'aplomb de la sonde de température.

Enfin, l'ensemble ci-dessus reste simple à réaliser par les procédés classiques de fabrications collectives utilisés pour réaliser des puces microélectroniques. En particulier, cet ensemble permet d'utiliser des substrats faciles à usiner et à assembler, couramment utilisés en microélectronique, comme des substrats en silicium, même si ces substrats présentent une très bonne conductivité thermique. Par ailleurs, étant donné que la face extérieure du caisson est affleurante avec celle du substrat, le raccordement électrique de la sonde de température à d'autres éléments réalisés sur le même substrat est simple à réaliser car il n'y a pas de différence de niveau à franchir entre la sonde de température située sur la face extérieure du caisson et un autre élément situé directement sur le substrat.

Les modes de réalisation de cette pompe peuvent comporter une ou plusieurs des caractéristiques des revendications dépendantes.

Ces modes de réalisation de la pompe présentent en outre les avantages suivants :
- le fait que le substrat entoure le caisson permet de limiter le nombre de substrats utilisés pour fabriquer l'ensemble et de simplifier l'assemblage des substrats entre eux ;
- un caisson dont l'épaisseur du matériau thermiquement isolant est supérieure à 100 µm permet d'obtenir une très bonne isolation thermique de la sonde de température et donc une précision élevée pour l'ensemble de mesure.

L'invention a également pour objet un procédé de fabrication d'une pompe conforme à la revendication 8.

Les modes de réalisation de ce procédé de fabrication peuvent comporter une ou plusieurs des caractéristiques des revendications dépendantes.

Ces modes de réalisation du procédé présentent en outre les avantages suivants :
- l'utilisation d'une plaque en matériau thermiquement isolant puis l'application d'un traitement thermique pour que cette plaque fonde à l'intérieur du caisson, permet de fabriquer très simplement des caissons remplis de matériau thermiquement isolant tel que du verre ;
- réaliser en une seule étape un caisson rempli d'un matériau oxydable, puis oxyder ce matériau, permet d'obtenir le caisson rempli d'un matériau thermiquement isolant sans avoir recours à une étape consistant à creuser un caisson dans la face du substrat.

L'invention sera mieux comprise à la lecture de la description qui va suivre, donnée uniquement à titre d'exemple non limitatif et faîte en se référant aux dessins sur lesquels :
- la figure 1 est une illustration schématique d'une pompe en coupe verticale,
- la figure 2 est une illustration schématique en vue de dessus d'un premier substrat de la pompe de la figure 1 ;
- la figure 3 est une illustration en coupe verticale d'un ensemble de mesure du débit de la pompe, incorporé dans la pompe de la figure 1 ;
- la figure 4 est un organigramme d'un procédé de fabrication de la pompe de la figure 1 ;
- les figures 5 à 17 sont des illustrations schématiques, en coupe verticale, de différentes étapes de fabrication de la pompe de la figure 1 ;
- la figure 9A est une illustration schématique, en coupe verticale, d'une variante de l'étape de fabrication de la figure 9 ;
- les figures 18, 23 et 27 sont des organigrammes de différents procédés de fabrication de l'ensemble de la figure 3 ;
- les figures 19 à 22 sont des illustrations schématiques, en coupe verticale, de différentes étapes du procédé de la figure 18 ;
- les figures 24 à 26 sont des illustrations schématiques, en coupe verticale, de différentes étapes du procédé de la figure 23 ;
- les figures 28 à 30 sont des illustrations schématiques, en coupe verticale, de différentes étapes du procédé de la figure 27 ;
- la figure 31 est une illustration schématique en coupe verticale d'un autre mode de réalisation de la pompe de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail.

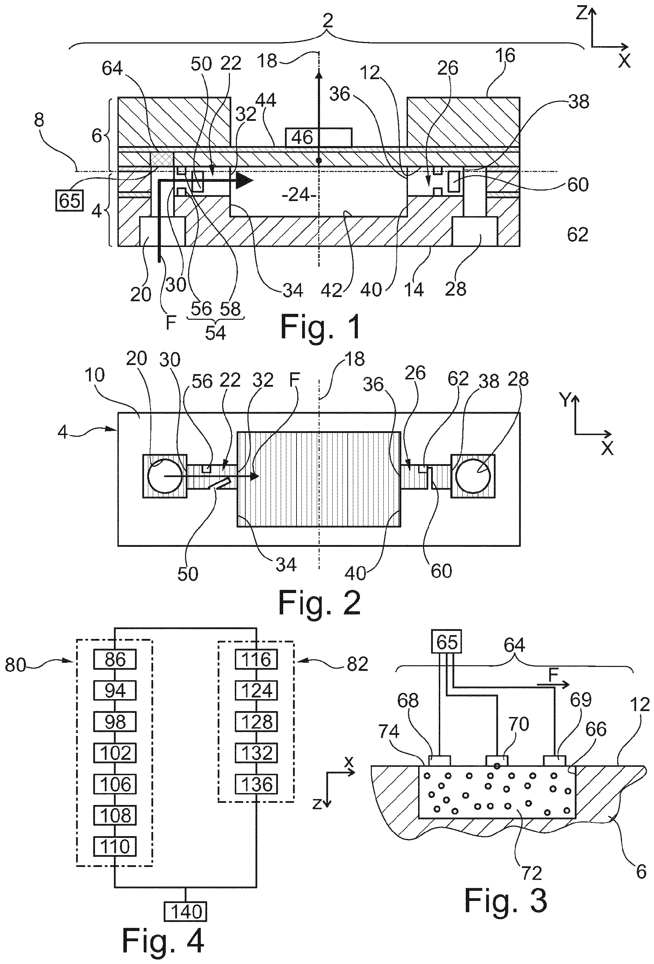

La figure 1 représente une pompe 2 de type planaire, c'est-à-dire dont les principaux éléments de la pompe sont situés dans un même plan parallèle à une face d'un même substrat. Cette pompe 2 est conçue pour permettre de pomper un volume très précis d'un fluide. Le fluide peut être un liquide tel que de l'eau ou une solution à injecter. Le fluide peut également être un gaz. Le sens d'écoulement du fluide à l'intérieur de la pompe est indiqué par une flèche F. Dans la suite de la description, l'amont et l'aval sont définis par rapport à la direction d'écoulement F.

La pompe 2 est ici un microsystème et peut donc être appelée micropompe. Typiquement, la plus grande largeur de la pompe est inférieure à 2 ou 1 cm. Cette plus grande largeur est généralement supérieure à 1 mm.

Ici, la pompe 2 est réalisée à partir de seulement deux substrats 4 et 6 collés l'un au-dessus de l'autre. L'interface 8 de collage entre ces deux substrats 4 et 6 est présentée par un axe sur la figure 1. Cette interface 8 de collage s'étend dans un plan horizontal parallèle à des directions X et Y orthogonales entre elles. Une direction Z orthogonale aux directions X et Y représente la direction verticale. Par la suite, les termes « supérieur », « inférieur », « au-dessus » et « au-dessous » sont définis par rapport à cette direction Z.

Le substrat 6 est au-dessus du substrat 4. Le substrat 4 comporte :
- une face supérieure horizontale 10 (figure 2) tournée vers une face inférieure horizontale 12 du substrat 6, et
- une face inférieure horizontale 14 du côté opposé à la face 10.

Le substrat 6 comporte également une face supérieure horizontale 16 du côté opposé à sa face inférieure 12.

Les différentes couches formant chacun de ces substrats seront décrites plus en détail en référence au procédé de la figure 3. La figure 2 représente une vue de dessus de la pompe 2 lorsque le substrat 6 est omis.

La suite de la description de la pompe 2 est faite en référence à ces deux figures 1 et 2.

La pompe 2 présente un plan vertical 18 de coupe. Ici, ce plan 18 est parallèle aux directions Y et Z. Par la suite, seules les éléments de la pompe 2 dans la partie gauche de ce plan 18 sont décrits en détail.

Le substrat 4 comporte successivement dans le sens F d'écoulement du fluide :
- un trou vertical 20 traversant de part en part le substrat 4,
- un canal rectiligne 22 d'admission du fluide,
- une chambre étanche 24,
- un canal 26 rectiligne d'évacuation du fluide, et
- un autre trou vertical 28 traversant de part en part le substrat 4.

Une extrémité du trou 20 débouche dans la face inférieure 14. Ici, cette extrémité est évasée pour recevoir, par exemple, un manchon qui permet de raccorder la pompe 2 à la sortie d'un circuit fluidique.

L'extrémité opposée du trou 20 débouche dans la face supérieure 10. Cette extrémité est bouchée par la face inférieure 12 du substrat 6.

Le trou 28 est le symétrique du trou 20 par rapport au plan 18.

Le canal 22 s'étend horizontalement parallèlement à la direction X. Il s'étend d'un orifice 30 d'entrée jusqu'à un orifice 32 de sortie. L'orifice 30 débouche dans une paroi verticale du trou 20. L'orifice 32 débouche dans une paroi verticale 34 de la chambre 24.

La section transversale du canal 22 est par exemple rectangulaire. La paroi supérieure du canal 22 est ici formée par la face inférieure 12 du substrat 6. Le canal 22 forme donc un tube.

Le canal 26 est le symétrique du canal 22 par rapport au plan 18. Il s'étend d'un orifice 36 d'entrée jusqu'à un orifice 38 de sortie. Les orifices 36 et 38 débouchent, respectivement, dans une paroi verticale 40 de la chambre 24 et dans le trou 28. La paroi 40 est le symétrique de la paroi 34 par rapport au plan 18.

La chambre 24 s'étend de part et d'autre du plan 18. Ici, cette chambre 24 est un parallélépipède qui s'étend principalement horizontalement. La chambre 24 définit un espace creux formé par la réunion :
- d'une cavité creusée dans la face supérieure 10 du substrat 4, et
- d'une membrane mobile 44 réalisée dans le substrat 6.

La cavité est délimitée dans le substrat 4 par des parois verticales, dont notamment les parois 34 et 40, et par une paroi horizontale 42 également appelée fond de la cavité.

Les parois verticales et le fond de la cavité ne forment qu'un seul bloc de matière avec le substrat 4 et sont fixes.

L'ouverture de cette cavité débouche dans la face supérieure 10.

Ici, l'intérieur de la chambre 24 est vide, c'est-à-dire notamment dépourvu de clapet anti-retour.

La membrane 44 recouvre la totalité de l'ouverture de la cavité pour former la chambre étanche 24. La chambre 24 est étanche au fluide pompé.

La membrane 44 se déforme élastiquement entre une position d'aspiration et une position de refoulement. Quand elle se déplace de la position de refoulement vers sa position d'aspiration, elle aspire le fluide à l'intérieur de la chambre 24 par l'intermédiaire du canal 22. Quand elle se déplace de sa position d'aspiration vers sa position de refoulement, elle refoule le fluide de l'intérieur de la chambre 24 vers l'extérieur par l'intermédiaire du canal 26.

Sur la figure 1, la membrane 44 est représentée dans une position de repos. Dans cette position de repos, elle s'étend horizontalement.

Dans ce mode de réalisation, dans la position d'aspiration, la membrane 44 est incurvée à l'intérieur du substrat 6. Dans cette position, le sommet de la membrane 44 est en retrait à l'intérieur du substrat 6 par rapport à son emplacement dans la position de repos de la membrane.

Dans la position de refoulement, la membrane 44 est incurvée à l'intérieur de la cavité formée dans le substrat 4. Le sommet de la membrane 44 est alors situé à l'intérieur de la cavité du substrat 4. Ce déplacement de la membrane de part et d'autre de sa position de repos permet de maximiser le volume pompé et donc d'augmenter la cylindré de la pompe.

Ici, la membrane 44 ne forme qu'un seul bloc de matière avec le substrat 6. Sa périphérie est donc fixée sans aucun degré de liberté au reste du substrat 6.

La pompe 2 comporte également un actionneur 46 capable de transformer l'énergie qu'il reçoit en un déplacement de la membrane 4 entre ses positions d'aspiration et de refoulement. Par exemple, l'actionneur 46 est un actionneur conventionnel tel qu'un actionneur électrostatique ou un actionneur piézoélectrique ou un actionneur bimétallique, tel qu'un bilame, ou un actionneur à mémoire de forme ou un actionneur thermo-pneumatique ou un actionneur électromagnétique.

Dans certain cas, l'actionneur est confondu en partie ou en totalité avec la membrane 44. C'est le cas, lorsque la membrane 44 est réalisée dans un matériau piézoélectrique ou par un complexe bicouche dans lequel chaque couche a un coefficient de dilatation différent de l'autre pour former un bilame. L'énergie reçue par l'actionneur peut être de l'énergie électrique ou de l'énergie thermique. L'énergie thermique est par exemple utilisée lorsque l'actionneur comporte le complexe bimétallique. Bien entendu, l'actionneur selon l'invention peut également être un dispositif externe à la membrane et relié à celle-ci par un élément mécanique d'accrochage

Le canal 22 comprend un clapet anti-retour 50 apte à empêcher ou à limiter la circulation du fluide dans le sens opposé à la direction F. Ce clapet 50 est situé en amont de l'orifice 32 et en aval de l'orifice 30 à l'intérieur du canal 22. Il est déplaçable entre une position ouverte et une position fermée. Dans la position ouverte, il laisse circuler plus facilement le fluide dans la direction F que dans sa position fermée. Dans sa position fermée, il empêche l'écoulement du fluide en sens inverse de la direction F. Ici, dans sa position fermée, le clapet 50 s'étend parallèlement au plan 18. Dans sa position ouverte, représentée sur les figures 1 et 2, le clapet 50 est incliné vers l'aval.

Le clapet 50 est une lame flexible de même section transversale que la section transversale du canal 22 mais de dimension légèrement plus petite. Ici, le clapet 50 a donc une section transversale rectangulaire. La hauteur de ce clapet h_{c} dans la direction Z et sa largeur L_{c} dans la direction Y sont inférieures, par exemple d'au moins 0,1 µm ou 1 µm, respectivement, à la hauteur et à la largeur du canal 22 selon les mêmes directions.

Le clapet 50 se déplace entre ses positions ouverte et fermée par rotation autour d'un axe solidaire du substrat 4. A cet effet, un côté proximal du clapet 50 est ancré sans aucun degré de liberté à l'une des parois du canal 22. Ici, ce côté proximal est ancré sur une paroi verticale du canal 22. Ainsi, le clapet 50 ne forme qu'un seul bloc de matière avec le substrat 4.

Le clapet 50 est flexible pour se déformer élastiquement entre ses positions ouverte et fermée uniquement sous l'action du fluide qui s'écoule. A cet effet, l'épaisseur e_{c} du clapet 50 est au moins cinq ou dix fois inférieure à sa largeur L_{c} ou à sa hauteur h_{c}. Typiquement, la largeur L_{c} et la hauteur h_{c} sont supérieures à 50 ou 100 µm. Par conséquent, typiquement, l'épaisseur du clapet 50 est inférieure à 10 µm ou 5 µm.

Dans sa position de repos, c'est-à-dire en absence de différence de pressions entre l'amont et l'aval du clapet 50, celui-ci est dans une position de repos située, par exemple, entre sa position ouverte et sa position fermée.

Dans la position fermée, la périphérie libre du clapet 50 est séparée des parois du canal 22 et de la face inférieure 12 du substrat 6 par un jeu. Par exemple, ce jeu est supérieur ou égal à 0,1 ou 1 µm. La périphérie libre du clapet 50 correspond à la périphérie du clapet 50 moins son côté ancré.

Plus précisément, ici, la périphérie libre du clapet 50 est formée :
- d'un côté supérieur horizontal en vis-à-vis de la face inférieure 12,
- d'un côté inférieur horizontal en vis-à-vis du fond du canal 22, et
- d'un côté distal vertical situé du côté opposé et parallèle au côté proximal du clapet 50.

Dans ce mode de réalisation, pour supprimer presque totalement les fuites au moins durant le fonctionnement par l'intermédiaire de ce jeu, le canal 22 comporte un épaulement 54 sur lequel vient directement en appui mécanique la périphérie libre du clapet 50 lorsque celui-ci est dans sa position fermée. Cet épaulement obstrue quasiment la totalité du jeu lorsque le clapet 50 est dans sa position fermée. L'épaulement 54 est situé en amont du clapet 50.

Par exemple, l'épaulement 54 est formé par deux butées 56 et 58. Les butées 56 et 58 sont fixées, sans aucun degré de liberté, respectivement, aux substrats 4 et 6.

La butée 56 a ici une forme de « L ». La barre horizontale du « L » s'étend parallèlement à la direction Y sur toute la longueur du fond du canal 22. La barre verticale du « L » s'étend parallèlement à la direction Z le long de la paroi verticale du canal 22 en vis-à-vis de la paroi du canal 22 sur laquelle est ancré le côté proximal du clapet 50. Ici, la barre verticale du « L » s'étend sur au moins 80 % de la hauteur du canal 22.

Dans la position fermée, les côtés inférieur et distal du clapet 50 reposent mécaniquement sur, respectivement, les barres horizontale et verticale du « L » de la butée 56.

La butée 58 s'étend parallèlement à la direction Y le long de la face inférieure 12. Cette butée 58 est en vis-à-vis de la barre horizontale du « L » de la butée 56. Sa longueur est supérieure à 70 ou 80 % de la largeur du canal 22 dans la direction Y. Dans la position fermée, le côté supérieur du clapet 50 repose sur la butée 58.

Le canal 26 comporte un clapet anti-retour 60. Dans les figures 1 et 2, il est représenté dans sa position fermée. Ce clapet 60 est réalisé de la même façon que le clapet 50.

Dans sa position fermée, la périphérie libre du clapet 60 vient directement en appui sur un épaulement 62 du canal 26 situé immédiatement en amont de ce clapet 60. L'épaulement 62 est par exemple identique à l'épaulement 54.

La pompe 2 comprend également un ensemble 64 de mesure du débit du fluide pompé. Cet ensemble est décrit plus en détail en référence à la figure 3.

L'ensemble 64 est raccordé à une unité électronique 65 de traitement apte à calculer le débit à partir des mesures relevées par l'ensemble 64.

La figure 3 représente plus en détail l'ensemble 64. Cet ensemble 64 comprend :
- le substrat 6,
- un caisson 66 rempli d'un matériau thermiquement isolant, et
- deux sondes de température 68 et 69 et une résistance électrique chauffante 70 disposées sur le matériau thermiquement isolant.

Dans cette description par matériau thermiquement isolant, on désigne un matériau dont la conductivité thermique à 20°C est inférieure à 5 W.m⁻¹.K⁻¹, et de préférence inférieure à 2 ou 1 W.m⁻¹.K⁻¹.

La sonde est la partie active qui est sensible à la température. Autrement dit, il s'agit de la partie qui permet d'effectuer la mesure. Par contre la sonde ne comprend pas nécessairement une partie de commande et de traitement des signaux générés par la sonde. Cette partie de commande et de traitement peut être disposée ailleurs que sur le caisson. Ainsi, lorsque l'on dit que la sonde est disposée sur la matériau thermiquement isolant, cela ne signifie pas nécessairement que la partie de commande et de traitement des signaux de la sonde est également disposée sur ce matériau thermiquement isolant. De préférence, chaque sonde est entièrement et uniquement disposée sur le matériau thermiquement isolant.

Le caisson 66, rempli du matériau thermiquement isolant, permet d'isoler thermiquement les sondes 68 et 69 et la résistance 70 du substrat 6. Ici, ce substrat 6 est réalisé dans un matériau thermiquement conducteur. Dans cette description, un matériau thermiquement conducteur désigne un matériau dont la conductivité thermique à 20°C est supérieure à 50 W.m⁻¹.K⁻¹ et, de préférence, supérieure à 100 ou 150 W.m-1.K-1. Par exemple, dans cette description, le substrat 6 comporte une couche en silicium, à l'intérieur de laquelle est creusé l'essentiel du caisson 66.

Le caisson 66 a ici une forme essentiellement parallélépipédique. Il est creusé dans la face 12 du substrat 6. De plus, il est complètement entouré, dans le plan XY, par le substrat 6.

La profondeur du caisson 66, comptée à partir du niveau de la face 12, est supérieure à 10 µm et typiquement supérieure à 50 ou 100 µm. La profondeur du caisson 66 est cependant inférieure à l'épaisseur du substrat 6 pour laisser subsister une bande du substrat 6 sous le caisson 66. L'épaisseur, dans la direction Z, de cette bande sous le caisson 66 est supérieure à 100 µm et, de préférence, supérieure à 200 ou 500 µm.

Le caisson 66 est complètement rempli d'un matériau 72 thermiquement isolant. Par exemple, le matériau 72 est du verre d'oxyde de silicium ou du verre borosilicate ou un polymère.

Le matériau 72 présente une face extérieure 74 affleurante avec la face 12 du substrat 6. Ici, ces faces 72 et 12 s'étendent dans le même plan à plus ou moins 0,5 µm près et, de préférence, à plus ou moins 0,1 µm près.

L'épaisseur du matériau 72 est ici égale à la profondeur du caisson 66. Ainsi, pour améliorer l'isolation thermique, de préférence, le caisson 66 est aussi profond que possible.

A titre d'illustration, la longueur dans la direction X du caisson 66 est supérieure à 50 µm et, de préférence, supérieure à 100 ou 200 µm. Sa largeur dans la direction Y est supérieure à 50 µm et, de préférence, supérieure à 100 ou 200 µm. Ainsi, la surface de la face 74 est supérieure à 500 ou 1000 µm².

Le caisson 66 est creusé dans le substrat 6 à un emplacement où la face 74 est directement en contact avec le fluide dont le débit doit être mesuré. Dans cet exemple, la face 74 débouche à l'intérieur du trou 20.

Les sondes 68 et 69 sont aptes à convertir une variation de température en une variation mesurable d'une propriété électrique. Par exemple, les sondes 68 et 69 sont des thermorésistantes ou des thermistances. Elles sont donc essentiellement formées d'un bloc de matière dont la résistance varie en fonction de la température. Par exemple, ces résistances sont des bandes réalisées dans un matériau choisi dans le groupe comportant l'argent, le cuivre, le nickel, l'or, le platine, le tungstène, le titane, l'aluminium ou encore le silicium.

Les sondes 68 et 69 sont entièrement disposées sur la face 74 pour être complètement isolées thermiquement du substrat par le matériau 72. Ici, les sondes 68 et 69 sont disposées l'une après l'autre dans la direction F d'écoulement du fluide. Chacune de ces sondes est raccordée électriquement par une liaison filaire à l'unité 65 de traitement.

La résistance électrique chauffante 70 est disposée directement sur la face 74 entre les sondes 68 et 69 dans la direction F. Cette résistance chauffe le fluide sous la commande de l'unité 65. De préférence, la résistance 70 est entièrement disposée sur la face 74 pour limiter la consommation d'énergie de l'ensemble 64. Ici, la résistance 70 est alimentée par l'unité 65 de traitement.

L'association des sondes 68 et 69 et de la résistance 70 forme un capteur de débit délivrant des signaux fonctions du débit du fluide pompé par la pompe 2.

L'unité 65 de traitement calcule le débit du fluide à partir des températures relevées aux mêmes instants, respectivement, par les sondes 68 et 69. Cette unité 65 fonctionne donc par exemple, comme décrit dans le brevet B1 suivant : US2009078040 ou dans la demande de brevet B2 suivante : US2006000270. En alternative ou en même temps, l'unité 65 peut aussi calculer la température du fluide pompé à partir des mesures des sondes 68 et 69.

Le fonctionnement de la pompe se déduit des explications précédentes et si nécessaires également des explications données dans la demande de brevet WO2011133014A1. Le fonctionnement de l'ensemble 64 est expliqué dans les demandes de brevet B1 et B2 et ne sera donc pas décrit ici plus en détail. Toutefois, on remarquera que l'absence de membrane permet d'augmenter la précision de la mesure du débit et de la température.

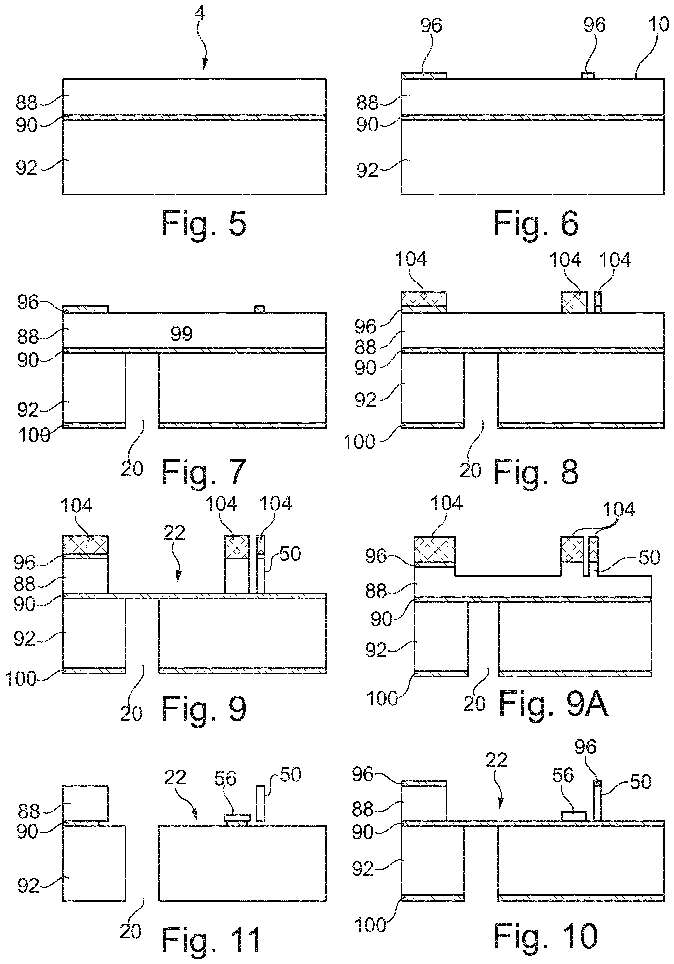

Un procédé de fabrication de la pompe 2 va maintenant être décrit en référence au procédé de la figure 4 et à l'aide des différentes vues des figures 5 à 17. Pour simplifier ces figures 5 à 17, sur chacune de ces figures, seule la partie à gauche du plan 18 a été représentée. De plus, le procédé de fabrication va maintenant être décrit dans le cas particulier où la profondeur de la chambre 24 est égale à la profondeur des canaux 22 et 26.

Le procédé de la figure 4 comporte deux phases 80 et 82 qui peuvent se dérouler en grande partie en parallèle.

La phase 80 est une phase de fabrication du substrat 4 tandis que la phase 82 est une phase de fabrication du substrat 6.

Au début de la phase 80, lors d'une étape 86, le substrat 4 est fourni. Ici, il s'agit d'un substrat BSOI (Bonded Silicon On Insulator). Le substrat 4 comporte une couche 88 (Figure 5) en silicium sur une couche 90 d'isolant électrique, elle-même directement disposée sur un support 92. La couche 88 présente une épaisseur comprise entre 10 et 200 µm. La couche 90 présente une épaisseur comprise entre 0,5 et 2 µm. Le support 92 qui est destiné à rigidifier le substrat présente à cet effet une épaisseur supérieure à 500 µm ou à 725 µm.

Ensuite, lors d'une étape 94, on procède au dépôt d'une couche d'oxyde sur la face supérieure. Par exemple, ce dépôt est réalisé par un dépôt chimique en phase vapeur assisté par plasma plus connue sous l'acronyme de PECVD (Plasma-Enhanced Chemical Vapor Déposition). Ensuite, on procède à une étape de lithographie puis de gravure de cette couche d'oxyde pour former un masque 96 (figure 6). La gravure est par exemple réalisée par gravure ionique réactive plus connue sous l'acronyme RIE (Reactive-Ion Etching).

Lors d'une étape 98, on dépose une couche d'oxyde sur la face inférieure du substrat 4. Par exemple, ce dépôt est réalisé selon le procédé PECVD. Ensuite, on procède à une lithographie suivie d'une gravure de cette couche pour former un masque 100 qui délimite l'emplacement du trou 20 (figure 7). Toujours lors de cette étape 98, on procède ensuite à la gravure de la face inférieure du substrat pour former une première partie du trou 20. Cette gravure est par exemple réalisée selon un procédé de gravure ionique réactive profonde plus connue sous l'acronyme de DRIE (Deep Reactive-Ion Etching).

Lors d'une étape 102, on procède à une étape de lithographie pour déposer un masque 104 en résine (figure 8). Ce masque 104 définit l'emplacement du clapet 50, du canal 22, de la chambre 24 et de la butée 56.

Lors d'une étape 106, on procède à la gravure de la face supérieure à travers le masque 104 (figure 9). Par exemple, sur la fig 9 cette gravure est réalisée selon le procédé DRIE en utilisant la couche 90 comme une couche d'arrêt. Cette gravure permet de former le canal 22, l'extrémité supérieure du trou 20, le clapet 50 ainsi que la cavité de la chambre 24.

Lors d'une étape 108, le masque 104 est enlevé (figure 10).

Ensuite, on procède à une gravure depuis la face supérieure en utilisant le masque 96. Cette gravure est par exemple réalisée selon le procédé DRIE. Cette gravure permet de former la butée 56.

Lors d'une étape 110, le clapet 50 est libéré en mettant en oeuvre une gravure HF en phase humide ou en phase vapeur (figure 11). Cette gravure permet également de retirer la couche 100 et de déboucher le trou 20.

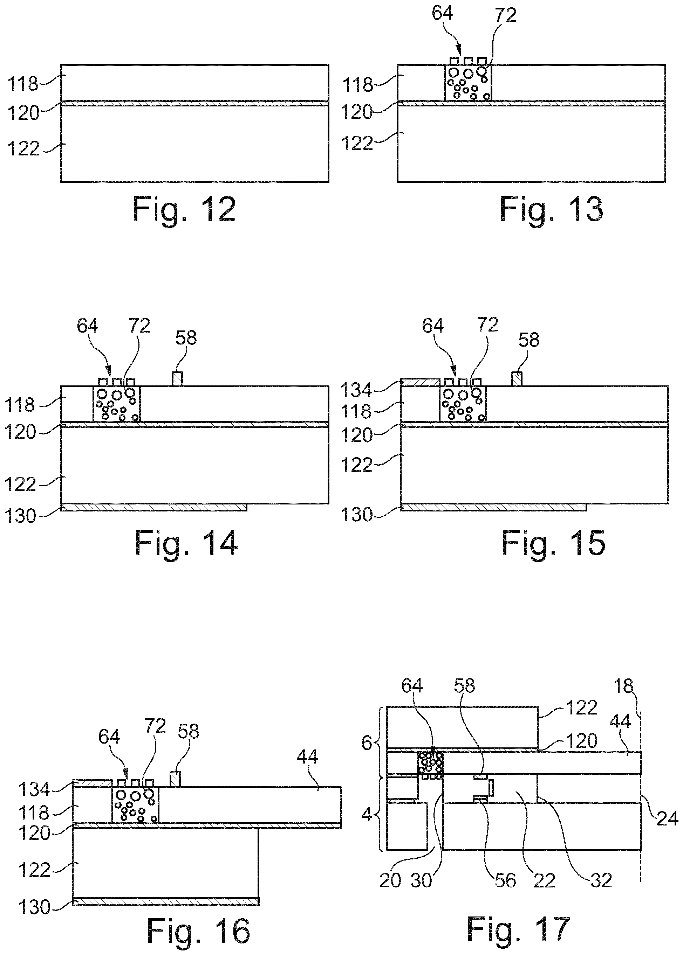

En parallèle, au début de la phase 82, lors d'une étape 116, le substrat 6 est fourni (figure 12). Ce substrat est également un substrat BSOI par exemple. Il comporte une couche 118 en silicium superposée sur une couche 120 d'isolant électrique, elle-même superposée sur un support 122. Les épaisseurs des couches 118, 120 et du support 122 sont par exemple comprises dans les mêmes plages que celles données pour le substrat 4 fourni lors de l'étape 86.

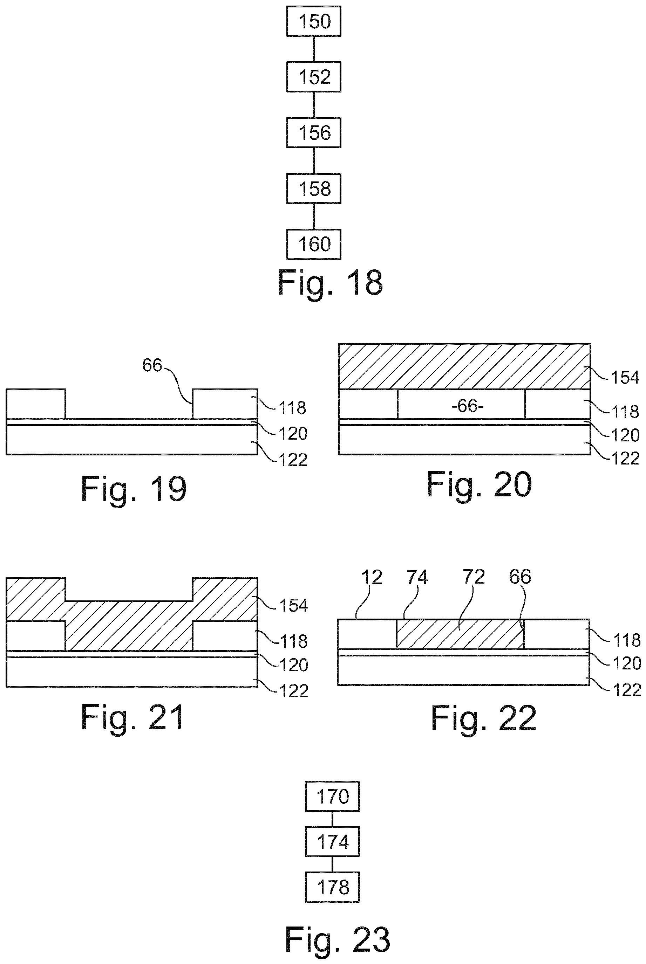

Lors d'une étape 124, l'ensemble 64 de mesure est réalisé (figure 13). Lors de cette étape 124, le caisson 66, rempli du matériau 72, est formé dans le substrat 6, puis les sondes 68, 69 et la résistance 70 sont disposées sur la face extérieure 74. Différents modes de réalisation de cette étape 124 sont décrits plus en détail en référence aux figures 18 et suivantes.

Lors d'une étape 128, la butée 58 (figure 14) est réalisée sur une portion de la face 12. Puis, un masque 130 (figure 14) est déposé sur la face inférieure du support 122. Pour obtenir ce masque, une couche d'oxyde est par exemple déposée selon le procédé PECVD puis on procède à des étapes de lithographie et de gravure pour former le masque 130. La gravure mise en oeuvre est par exemple une gravure RIE.

Lors d'une étape 132, une couche métallique 134 (figure 15) est déposée sur la couche 118. Par exemple, elle est déposée par le procédé connu sous l'acronyme PVD (Physical Vapor Déposition) ou par dépôt physique en phase vapeur. La couche métallique subit alors une étape de lithographie suivie d'une étape de gravure de cette couche métallique pour former la couche métallique 134 constituant l'essentiel de la face inférieure 12 du substrat 6.

Enfin, lors d'une étape 136, la membrane 44 est formée en gravant la face inférieure du substrat 6 à travers le masque 130 (figure 16). Lors de cette gravure, la couche 120 est utilisée comme couche d'arrêt.

Ensuite, une fois que les substrats 4 et 6 ont été fabriqués, lors d'une étape 140, on procède au collage de la face supérieure 10 du substrat 4 sur la face inférieure 12 du substrat 6 (figure 17). On obtient alors la pompe 2.

La figure 9A représente une variante du procédé de fabrication de la figure 4. Cette variante est identique au procédé de la figure 4 sauf que, lors de l'étape 106, on réalise une gravure qui permet de former partiellement la butée 56 ainsi que le canal 22, l'extrémité supérieure du trou 20, le clapet 50 ainsi que la cavité de la chambre 24. Cette gravure se fait typiquement sur une profondeur allant de 1 à 5 µm (figure 9A). Après l'étape 108 et avant l'étape 110, on procède à une nouvelle gravure depuis la face supérieure en utilisant le masque 96. Cette gravure est par exemple réalisée selon le procédé DRIE. Cette gravure permet de finaliser la formation de la butée 56, du canal 22, de l'extrémité supérieure du trou 20, du clapet 50 ainsi que de la cavité de la chambre 24.

La figure 18 représente un premier procédé de fabrication de l'ensemble 64. Lors d'une étape 150, le caisson 66 est creusé depuis la face 12, dans la couche 118 du substrat 6, par lithographie et gravure (figure 19). La profondeur du caisson 66 creusé est supérieure à 10 µm et, de préférence, supérieure à 100 µm.

Ensuite, lors d'une étape 152, une plaque rigide 154 en verre est collée sur la face 12 de la couche 118. Cette plaque recouvre le caisson 66 (figure 20). La plaque de verre est par exemple en verre borosilicate ou en verre d'oxyde de silicium.

Ensuite, lors d'une étape 156 de refusion, un traitement thermique est appliqué à la plaque 154. Lors de ce traitement thermique, la température de fusion de la plaque 154 est dépassée de sorte que cette plaque fond et remplit le caisson 66 (figure 21).

Lors d'une étape 158, la face du substrat est amincie puis polie de manière à remettre à jour la face de la couche 118 et à la rendre plane. De préférence, l'amincissement est réalisé par rectification mécanique ou « grinding » en anglais. Il peut aussi être réalisé chimiquement. Le polissage est par exemple un polissage mécanochimique. On obtient à l'issue de cette étape 158 le caisson 66 remplit du matériau 72.

Enfin, lors d'une étape 160, les sondes 68 et 69 et la résistance 70 sont formées sur la face 74. Par exemple, les sondes et la résistance sont fabriquées par dépôt et gravure de couches successives sur la face 74.

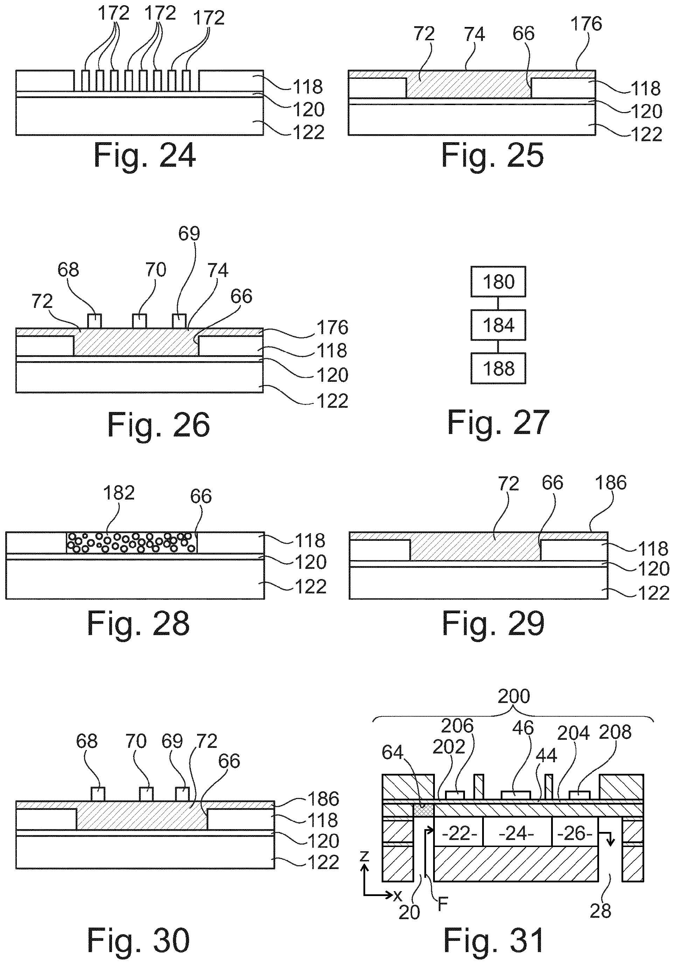

Un second procédé de fabrication de l'ensemble 164 va maintenant être décrit en référence au procédé de la figure 23 et à l'aide des figures 24 à 26. La fabrication du caisson dans ce procédé est similaire à celle décrite dans l'article A1 suivant :
Chunbo Zhang et Khalil Najafi, « Fabrication of thick silicon dioxide layers for thermal isolation », J. Microtechanics Microingenering 14 (2004) page 769-774.

Ainsi, dans la suite, les étapes de fabrication du caisson ne sont pas décrites en détail.

Lors d'une étape 170, des tranchées sont creusées dans la couche 118 de manière à délimiter des piliers verticaux 172 (Figure 24), s'étendant depuis la couche 120 jusqu'au niveau de la face extérieure de la couche 118. La hauteur de ces piliers est typiquement supérieure à 10 µm et, de préférence, supérieure à 50 ou 100 µm. La hauteur des piliers est par contre généralement inférieure à 200 µm. La largeur des piliers 172 dans les directions X et Y est environ égale à la largeur des tranchées dans ces mêmes directions. Par exemple, la largeur des piliers est d'environ 10 µm.

Ensuite, lors d'une étape 174, un traitement thermique entre 1100 et 1200° est appliqué pour oxyder les piliers 172. Cette étape d'oxydation est réalisée de manière à faire croître une couche d'oxyde de silicium d'environ 10 µm d'épaisseur. Ctte couche 174 d'oxyde de silicium remplit alors totalement les tranchées qui séparent les piliers 172. De plus, cette oxydation thermique transforme complètement les piliers 172 de silicium en oxyde de silicium. Ainsi, à l'issue de l'étape 174, le caisson 66 remplit d'oxyde de silicium est obtenu.

Enfin, lors d'une étape 178, les sondes 68, 69 et la résistance 70 sont formées sur la face 74 (figure 26) du matériau thermiquement isolant 74. Cette étape 178 est par exemple identique à l'étape 160.

Un troisième procédé de fabrication de l'ensemble 64 va maintenant être décrit à l'aide du procédé de la figure 27 et en référence aux figures 28 à 30. Dans ce procédé, la fabrication du caisson est similaire à celle décrite dans l'article A2 suivant :
P. Maccagnani, « Thick oxidized porous silicon layer as thermo-insulating material for high temperature operating thin and thick film gas sensors », Transducer's 1997.

Lors d'une étape 180, un caisson 66 rempli de silicium poreux 182 est formé. Par exemple, pour cela on utilise une anodisation ou une implantation de dopants. Plus de détails sur cette étape sont donnés dans l'article A2. La profondeur du caisson est supérieure à 10 µm et, généralement, inférieure à 200 µm.

Ensuite, lors d'une étape 184, une oxydation du silicium est réalisée en appliquant, par exemple, un traitement thermique. Cette oxydation fait apparaître une couche 186 d'oxyde dont l'épaisseur est typiquement inférieure à 5 µm. Étant donnée la structure poreuse du silicium poreux 182, la quasi-totalité du silicium poreux 182 s'oxyde lors de cette étape. De plus, les pores du silicium poreux se remplissent d'oxyde de silicium. A l'issue de cette étape 184, le caisson 66 rempli d'oxyde de silicium est obtenu. Ainsi, de préférence, l'étape 184 est poursuivie jusqu'à ce que plus de 90 % ou 95 % ou 99 % ou la totalité du silicium poreux 182 soit oxydé. Toutefois, en variante, il est aussi possible de n'oxyder qu'une partie du silicium poreux 182. Par exemple, seule une couche superficielle d'au moins 10 µm d'épaisseur du silicium poreux est complètement oxydée.

Enfin, lors de l'étape 188, les sondes 68 et 69 et la résistance 70 sont formées, par exemple, comme décrit en référence en l'étape 160.

La figure 31 représente un pompe 200. La pompe 200 est identique à la pompe 2 sauf que les clapets 50, 60 sont remplacés, respectivement, par des membranes 202 et 204. Les épaulements 54, 62 sont omis. De plus, dans la figure 31, la profondeur de la chambre 24 est égale à la profondeur des canaux 22 et 24. Les membranes 22 et 24 constituent les parois supérieures, respectivement, des canaux 22 et 24. Elles sont réalisées et fonctionnent comme la membrane 44. Les membranes 202 et 204 sont déplacées entre leur positions d'aspiration et de refoulement par, respectivement, des actionneurs 206 et 208. Par exemple, ces actionneurs 206 et 208 sont identiques à l'actionneur 46.

Lors du fonctionnement de la pompe 200, les actionneurs 206, 44 et 208 sont actionnés successivement dans cet ordre pour déplacer une quantité de fluide du canal 22 vers la chambre 24 puis de la chambre 24 vers le canal 26. Une fois que la membrane 204 revient dans sa position de repos, on recommence à actionner le membrane 202 pour refouler une nouvelle quantité de fluide vers la chambre 24. La pompe 200 ne nécessite pas de clapet anti-retour pour fonctionner. Un procédé de fabrication de cette pompe 200 peut facilement être déduit des explications données pour la fabrication de la pompe 2.

De nombreux autres modes de réalisation sont possibles. Par exemple, d'autres matériaux thermiquement conducteurs peuvent être utilisés pour les substrats. Ainsi, le matériau thermiquement conducteur peut être du gallium ou du nitrate de gallium. Le matériau thermiquement conducteur peut être homogène ou hétérogène. Il est considéré comme hétérogène lorsqu'il est formé par l'assemblage de plusieurs matériaux homogènes différents. C'est le cas du substrat 6 décrit en référence au procédé de la figure 4. En effet, dans ce cas particulier, le substrat 6 a été décrit comme étant formé d'un assemblage de différentes couches de matériaux thermiquement conducteurs. En variante, le substrat est un matériau homogène entièrement réalisé dans le même matériau thermiquement conducteur, tel que par exemple du silicium.

De façon similaire, d'autres matériaux thermiquement isolants sont possibles pour remplir le caisson. Par exemple, le matériau peut être un polymère, tel qu'un polymère avec des graffites pour limiter les déformations mécaniques dues aux différences de coefficients de dilatation entre le substrat et le polymère. Le matériau thermiquement isolant peut aussi être directement du silicium poreux. Comme le matériau du substrat, le matériau thermiquement isolant peut être homogène ou hétérogène. Il est hétérogène lorsque le matériau thermiquement isolant est formé par l'assemblage de plusieurs matériaux différents thermiquement isolants. Par exemple, il peut être formé par un assemblage de plusieurs couches de différents matériaux thermiquement isolants.

Le collage du substrat 4 sur le substrat 6 peut être réalisé par différentes méthodes tel que :
- le collage moléculaire, c'est-à-dire sans ajout de matière,
- un scellement métallique eutectique ou par thermo-compression,
- un scellement avec une colle polymère, et/ou
- un scellement par verre frité.

Le substrat 6 n'est pas nécessairement rapporté sur le substrat 4. Il peut également être déposé sur le substrat 4 sous la forme d'une couche elle même déposée sur une couche sacrificielle remplissant les différents canaux et cavité du substrat 4. Ensuite, après le dépôt du substrat 6, la couche sacrificielle est retirée de manière à libérer les canaux et la chambre de la pompe.

Les sondes de température ainsi que la résistance chauffante peuvent être fabriquées indépendamment du caisson rempli du matériau thermiquement isolant, puis rapportées ensuite sur la face extérieure 74.

L'ensemble de mesure décrit précédemment peut être utilisé dans d'autres pompes. Par exemple, il peut être utilisé dans la pompe décrite dans la demande B1. Elle peut aussi être utilisée dans des pompes dépourvues de clapet anti-retour comme la pompe 200. L'ensemble peut également être utilisé dans d'autres systèmes qui ne sont pas nécessairement des pompes. Par exemple, l'ensemble peut être utilisé simplement pour mesurer le débit qui circule dans une canalisation microfluidique d'un appareil. L'ensemble 64 peut aussi être utilisé pour mesurer uniquement la température du fluide. Dans ce cas, la résistance 70 peut être omise et une seule sonde de température peut suffire.

La pompe peut aussi être réalisée à partir de l'assemblage de plus de deux substrats.

L'ensemble de mesure peut être placé ailleurs dans la pompe. Par exemple, l'ensemble de mesure est placé de manière à ce que les sondes de température et la face 74 soient affleurantes dans l'un quelconque des canaux de la pompe ou dans la chambre 24. L'ensemble de mesure peut également être réalisé dans le substrat 4 plutôt que dans le substrat 6.

Dans un autre mode de réalisation, les canaux et la cavité ne sont pas creusés mais formés par dépôt de couches structurées successivement les unes au-dessus des autres.

En variante, la position d'aspiration de la membrane 42 ou, en alternance, sa position de refoulement peut être confondue avec la position de repos.

La cavité peut avoir la même section transversale que les canaux 22 et 26. Dans ce cas, la cavité ne se distingue des canaux que par le fait qu'elle est recouverte par la membrane mobile, ce qui n'est pas le cas des canaux.

La pompe 2 peut également comporter plusieurs canaux d'admission et plusieurs canaux d'évacuation fluidiquement raccordés à la même chambre 24. Dans ce cas, chacun de ces canaux d'admission et d'évacuation comporte son propre clapet anti-retour.

Dans un autre mode de réalisation, le déplacement de chaque clapet est actionné par un actionneur électrique ou thermique. Par exemple, l'actionneur est basé sur un principe similaire à ceux mis en en oeuvre pour déplacer la membrane 44.

Dans un mode de réalisation simplifié, les épaulements sont omis. En effet, si le jeu entre la périphérie libre du clapet et les parois du canal est suffisamment réduit, cela conduit à avoir des fuites de liquide négligeables même en absence des épaulements.

## Revendications

1. Pompe comportant :
- un premier substrat (4) s'étendant essentiellement dans un plan, ce substrat présentant une face,
- une cavité formée dans la face du premier substrat,
- des canaux (22, 26) d'admission et d'évacuation d'un fluide, formés dans la face du premier substrat,
- un second substrat (6) présentant une face assemblée sur la face du premier substrat, cette face refermant les canaux (22, 26) pour former des tubes à l'intérieur desquels le fluide pompé est apte à circuler, ce second substrat comportant également au moins une membrane (44) refermant la cavité pour former une chambre (24) étanche au fluide, cette membrane étant déformable :
• d'une position d'aspiration jusqu'à une position de refoulement pour refouler le fluide à l'extérieur de la chambre par l'intermédiaire du canal d'évacuation, et
• de la position de refoulement jusqu'à la position d'aspiration pour aspirer le fluide à l'intérieur de la chambre par l'intermédiaire du canal d'admission,
- un ensemble (64) de mesure de la température ou du débit du fluide,
**caractérisé en ce que** la pompe comporte :
- un actionneur (46) capable de transformer l'énergie qu'il reçoit en un déplacement de la membrane (4) entre ses positions d'aspiration et de refoulement, et
- l'ensemble (64) de mesure de la température ou du débit du fluide comporte :
• à l'intérieur d'un des substrats (6), un caisson (66) entièrement rempli d'un matériau (72) solide thermiquement isolant présentant une face extérieure (74) affleurante à l'intérieure du tube ou de la chambre, le matériau solide thermiquement isolant étant un matériau présentant une conductivité thermique à 20°C, inférieure à 5 W.m⁻¹.K⁻¹, et
• une sonde (68, 69) de température disposée, au-dessus du caisson, sur la face extérieure du matériau isolant pour isoler thermiquement cette sonde du substrat.

2. Pompe selon la revendication 1, dans laquelle la pompe comporte en outre un premier et un second clapets anti-retour (50, 60) logés, respectivement, à l'intérieur des canaux d'admission et d'évacuation.

3. Pompe selon l'une quelconque des revendications précédentes, dans laquelle l'épaisseur du matériau thermiquement isolant dans le caisson est supérieure à 10 µm et strictement inférieure à l'épaisseur du substrat de manière à conserver sous le caisson une épaisseur d'au moins 100 µm du substrat.

4. Pompe selon l'une quelconque des revendications précédentes, dans laquelle la face du substrat contenant le caisson entoure complètement le caisson formant ainsi une périphérie du caisson, et la face de l'autre substrat est assemblée sur ce substrat sur cette périphérie du caisson.

5. Pompe selon l'une quelconque des revendications précédentes, dans laquelle l'épaisseur du matériau thermiquement isolant (72) contenu dans le caisson est supérieure à 100 µm.

6. Pompe selon l'une quelconque des revendications précédentes, dans laquelle le substrat (6) contenant le caisson (66) comporte une couche (118) d'au moins 10 µm d'épaisseur réalisée dans un matériau thermiquement conducteur et le caisson est essentiellement situé à l'intérieur de cette couche, un matériau thermiquement conducteur étant défini comme étant un matériau dont la conductivité thermique à 20°C est supérieure à 50 W.m⁻¹.K⁻¹.

7. Pompe selon la revendication 6, dans laquelle la couche (118) est en silicium.

8. Procédé de fabrication d'une pompe conforme à l'une quelconque des revendications précédentes, ce procédé comportant :
- la fourniture (86) d'un premier substrat s'étendant essentiellement dans un plan, le premier substrat présentant une face,
- la formation (106) d'une cavité et de canaux d'admission et d'évacuation dans la face du premier substrat,
- l'assemblage (140) sur la face du premier substrat, d'un second substrat présentant une face refermant les canaux de manière à former des tubes à l'intérieur desquels le fluide pompé est apte à circuler, ce second substrat comportant également au moins une membrane refermant la cavité pour former une chambre étanche au fluide, cette membrane étant déformable :
• d'une position d'aspiration jusqu'à une position de refoulement pour refouler le fluide à l'extérieur de la chambre par l'intermédiaire du canal d'évacuation, et
• de la position de refoulement jusqu'à la position d'aspiration pour aspirer le fluide à l'intérieur de la chambre par l'intermédiaire du canal d'admission
**caractérisé en ce que** le procédé comporte :
- la fourniture d'un actionneur capable de transformer l'énergie qu'il reçoit en un déplacement de la membrane entre ses positions d'aspiration et de refoulement,
- la formation (124), à l'intérieur de l'un des substrats, d'un caisson entièrement rempli d'un matériau solide thermiquement isolant présentant une face extérieure affleurante à l'intérieure du tube ou de la chambre, le matériau solide thermiquement isolant étant un matériau présentant une conductivité thermique à 20°C, inférieure à 5 W.m⁻¹.K⁻¹, et
- la formation (124) d'au moins une sonde de température entièrement disposée sur la face extérieure du matériau thermiquement isolant pour isoler thermiquement cette sonde du substrat de manière à obtenir un ensemble de mesure de la température ou du débit du fluide

9. Procédé de fabrication selon la revendication 8, dans lequel l'épaisseur du matériau thermiquement isolant remplissant le caisson est supérieure à 10 µm et strictement inférieure à l'épaisseur du substrat de manière à conserver sous le caisson une épaisseur d'au moins 100 µm du substrat.

10. Procédé selon la revendication 8 ou 9, dans lequel, la formation du caisson dans le substrat comporte :
- la réalisation (150) d'une cavité dans la face de ce substrat,
- le report (152) d'une plaque rigide en matériau thermiquement isolant sur la face de ce substrat, la plaque recouvrant ainsi la cavité,
- l'application (156) d'un traitement thermique à une température supérieure à la température de fusion de la plaque pour que celle-ci fonde à l'intérieur de la cavité, et
- l'amincissement (158) de la plaque fondue jusqu'à retrouver la face du substrat.

11. Procédé selon la revendication 10, dans lequel le matériau thermiquement isolant de la plaque est un verre de borosilicate ou un verre d'oxyde de silicium.

12. Procédé selon la revendication 8, dans lequel la formation du caisson dans le substrat comporte :
- la fourniture (116) d'un substrat comportant une couche en matériau oxydable dont l'oxyde de ce matériau est un matériau thermiquement isolant,
- la réalisation (170) de tranchées dans la face de ce substrat d'au moins 10 µm de profondeur, ces tranchées délimitant des piliers dans la couche en matériaux oxydable du substrat,
- l'oxydation (174) des piliers sur toutes leurs épaisseurs, de manière à former un oxyde qui remplit les tranchées, les piliers oxydés et les tranchées remplis d'oxydes formant alors le caisson rempli de matériau thermiquement isolant.

13. Procédé selon la revendication 8, dans lequel la formation du caisson dans le substrat comprend :
- la fourniture (116) d'un substrat comportant une couche en matériau oxydable dont l'oxyde est un matériau thermiquement isolant,
- la formation (180) d'un caisson d'au moins 10 µm de profondeur rempli du matériau de la couche mais rendu poreux.

14. Procédé selon la revendication 13, dans lequel le procédé comporte en outre une étape d'oxydation (182) de tout ou partie du matériau poreux de manière à remplir les pores de ce matériau poreux d'oxyde et de manière à oxyder au moins partiellement les parois de ce matériau poreux afin d'obtenir le caisson rempli de matériau thermiquement isolant.

## Patentansprüche

1. Pumpe, umfassend:
- ein erstes Substrat (4), das sich im Wesentlichen in einer Ebene erstreckt, wobei dieses Substrat eine Fläche aufweist,
- einen Hohlraum, der in der Fläche des ersten Substrats gebildet ist,
- Kanäle (22, 26) zum Aufnehmen und Abführen eines Fluids, die auf der Fläche des ersten Substrats assembliert sind,
- ein zweites Substrat (6), das eine Fläche aufweist, die auf der Fläche des ersten Substrats assembliert ist, wobei diese Fläche Kanäle (22, 26) umfasst, um Röhren zu bilden, in deren Innerem das gepumpte Fluid geeignet ist, zu zirkulieren, wobei dieses zweite Substrat auch mindestens eine Membran (44) umfasst, die den Hohlraum einschließt, um eine fluiddichte Kammer (24) zu bilden, wobei diese Membran verformbar ist:
• aus einer Ansaugposition in eine Rückführposition, um das Fluid zur Außenseite der Kammer mit Hilfe des Abfuhrkanals zurückzuführen, und
• aus der Rückführposition in die Ansaugposition, um das Fluid in die Innenseite der Kammer mit Hilfe des Aufnahmekanals anzusaugen,
- eine Einheit (64) zur Messung der Temperatur oder der Durchflussrate des Fluids,
**dadurch gekennzeichnet, dass** die Pumpe umfasst:
- einen Betätiger (46), der die Energie, die er empfängt, in eine Verschiebung der Membran (4) zwischen ihrer Ansaug- und Rückführposition umwandeln kann, und
- die Einheit (64) zur Messung der Temperatur oder der Durchflussrate des Fluids umfasst:
• im Inneren eines der Substrate (6), ein Gehäuse (66), das zur Gänze mit einem festen, thermisch isolierenden Material (72) gefüllt ist, und das eine Außenfläche (74) aufweist, die mit dem Inneren der Röhre oder der Kammer bündig ist, wobei das feste, thermisch isolierende Material ein Material ist, das eine thermische Leitfähigkeit bei 20 °C von weniger als 5 W.m⁻¹.K⁻¹ aufweist, und
• eine Temperatursonde (68, 69), die, über dem Gehäuse, auf der Außenfläche des Isoliermaterials angeordnet ist, um diese Sonde gegen das Substrat thermisch zu isolieren.

2. Pumpe nach Anspruch 1, wobei die Pumpe außerdem ein erstes und ein zweites Rückschlagventil (50, 60) umfasst, die jeweils im Inneren des Aufnahme- und Abfuhrkanals angeordnet sind.

3. Pumpe nach einem der vorhergehenden Ansprüche, wobei die Dicke des thermisch isolierenden Materials in dem Gehäuse größer als 10 µm und streng kleiner als die Dicke des Substrats ist, um unter dem Gehäuse eine Dicke von mindestens 100 µm des Substrats aufrechtzuerhalten.

4. Pumpe nach einem der vorhergehenden Ansprüche, wobei die Fläche des Substrats, die das Gehäuse enthält, das Gehäuse vollständig umgibt, wobei so ein Umfang des Gehäuses gebildet wird, und die Fläche des anderen Substrats auf diesem Substrat auf diesem Umfang des Gehäuses assembliert ist.

5. Pumpe nach einem der vorhergehenden Ansprüche, wobei die Dicke des thermisch isolierenden Materials (72), das in dem Gehäuse enthalten ist, größer ist als 100 µm.

6. Pumpe nach einem der vorhergehenden Ansprüche, wobei das Substrat (6), welches das Gehäuse (66) enthält, eine Schicht (118) mit einer Dicke von mindestens 10 µm umfasst, die aus einem thermisch leitenden Material gebildet ist, wobei ein thermisch leitendes Material als Material definiert ist, dessen thermische Leitfähigkeit bei 20 °C größer ist als 50 W.m⁻¹.K⁻¹.

7. Pumpe nach Anspruch 6, wobei die Schicht (118) aus Silicium besteht.

8. Verfahren zur Herstellung einer Pumpe nach einem der vorhergehenden Ansprüche, wobei das Verfahren umfasst:
- Bereitstellen (86) eines ersten Substrats, das sich im Wesentlichen in einer Ebene erstreckt, wobei das erste Substrat eine Fläche aufweist,
- Bilden (106) eines Hohlraums und von Aufnahme- und Abfuhrkanälen in der Fläche des ersten Substrats,
- Assemblieren (140), auf der Fläche des ersten Substrats, eines zweiten Substrats, das eine Fläche aufweist, die Kanäle einschließt, um Röhren zu bilden, in deren Innerem das gepumpte Fluid geeignet ist, zu zirkulieren, wobei dieses zweite Substrat auch mindestens eine Membran umfasst, die den Hohlraum einschließt, um eine fluiddichte Kammer zu bilden, wobei diese Membran verformbar ist:
• aus einer Ansaugposition in eine Rückführposition, um das Fluid zur Außenseite der Kammer mit Hilfe des Abfuhrkanals zurückzuführen, und
• aus der Rückführposition in die Ansaugposition, um das Fluid in die Innenseite der Kammer mit Hilfe des Aufnahmekanals anzusaugen,
**dadurch gekennzeichnet, dass** das Verfahren umfasst:
- Bereitstellen eines Betätigers, der die Energie, die er empfängt, in eine Verschiebung der Membran zwischen ihrer Ansaug- und Rückführposition umwandeln kann, und
- Bilden (124), im Inneren eines der Substrate, eines Gehäuses, das zur Gänze mit einem festen, thermisch isolierenden Material gefüllt ist, und das eine Außenfläche aufweist, die mit dem Inneren der Röhre oder der Kammer bündig ist, wobei das feste, thermisch isolierende Material ein Material ist, das eine thermische Leitfähigkeit bei 20 °C von weniger als 5 W.m⁻¹.K⁻¹ aufweist, und
- Bilden (124) mindestens einer Temperatursonde, die zur Gänze auf der Außenfläche des thermisch isolierenden Materials angeordnet ist, um diese Sonde gegen das Substrat thermisch zu isolieren, um eine Einheit zur Messung der Temperatur oder des Durchsatzes des Fluids zu erhalten.

9. Herstellungsverfahren nach Anspruch 8, wobei die Dicke des thermisch isolierenden Materials, welches das Gehäuse füllt, größer als 10 µm und streng kleiner als die Dicke des Substrats ist, um unter dem Gehäuse eine Dicke von mindestens 100 µm des Substrats aufrechtzuerhalten.

10. Verfahren nach Anspruch 8 oder 9, wobei das Bilden des Gehäuses in dem Substrat umfasst:
- Bilden (150) eines Hohlraums in der Fläche dieses Substrats,
- Bereitstellen (152) einer starren Platte aus einem thermisch isolierenden Material auf der Fläche dieses Substrats, wobei die Platte so den Hohlraum bedeckt,
- Anwenden (156) einer thermischen Behandlung bei einer Temperatur über der Schmelztemperatur der Platte, damit diese im Inneren des Hohlraums schmilzt, und
- Ausdünnen (158) der geschmolzenen Platte bis zum Erreichen der Fläche des Substrats.

11. Verfahren nach Anspruch 10, wobei das thermisch isolierende Material der Platte ein Borsilikatglas oder ein Siliciumoxidglas ist.

12. Verfahren nach Anspruch 8, wobei das Bilden des Gehäuses in dem Substrat umfasst:
- Bereitstellen (116) eines Substrats, das eine Schicht aus einem oxidierbaren Material umfasst, wobei das Oxid dieses Materials ein thermisch isolierendes Material ist,
- Bilden (170) von Gräben in der Fläche dieses Substrats mit einer Tiefe von mindestens 10 µm, wobei diese Gräben Säulen in der Schicht aus dem oxidierbaren Material des Substrats begrenzen,
- Oxidieren (174) der Säulen auf allen ihren Dicken, um ein Oxid zu bilden, das die Gräben füllt, wobei die oxidierten Säulen und die mit Oxiden gefüllten Gräben so das Gehäuse bilden, das mit dem thermisch isolierenden Material gefüllt ist.

13. Verfahren nach Anspruch 8, wobei das Bilden des Gehäuses in dem Substrat umfasst:
- Bereitstellen (116) eines Substrats, das eine Schicht aus einem oxidierbaren Material umfasst, wobei das Oxid ein thermisch isolierendes Material ist,
- Bilden (180) eines Gehäuses mit einer Tiefe von mindestens 10 µm, welches mit dem Material der Schicht gefüllt ist, das jedoch porös gemacht wird.

14. Verfahren nach Anspruch 13, wobei das Verfahren außerdem einen Oxidationsschritt (182) des gesamten oder eines Teils des porösen Materials umfasst, um die Poren dieses porösen Oxidmaterials zu füllen, und um mindestens teilweise die Wände dieses porösen Materials zu oxidieren, um das Gehäuse zu erhalten, das mit dem thermisch isolierenden Material gefüllt ist.

## Claims

1. Pump comprising:
- a first substrate (4) extending essentially in a plane, this substrate having a side;
- a cavity formed in the side of the first substrate;
- intake and discharge channels (22, 26) for admitting and discharging a fluid, respectively, said channels being formed in the side of the first substrate;
- a second substrate (6) having a side joined to the side of the first substrate, this side closing the channels (22, 26) in order to form tubes inside of which the pumped fluid is able to flow, this second substrate also comprising at least one membrane (44) closing the cavity to form a chamber (24) that is leak-tight to the fluid, this membrane being deformable:
• from a suction position to an expulsion position in order to expel the fluid out of the chamber via the discharge channel, and
• from the expulsion position to the suction position in order to suck the fluid into the chamber via the intake channel;
- an assembly (64) for measuring the temperature or flow rate of the fluid,
**characterized in that** the pump comprises:
- an actuator (46) capable of converting the energy that it receives into a movement of the membrane (4) between its suction and expulsion positions, and
- the assembly (64) for measuring the temperature or flow rate of the fluid comprises:
• inside one of the substrates (6), a well (66) entirely filled with a thermally insulating solid material (72) having an exterior side (74) flush with the interior of the tube or of the chamber, the thermally insulating solid material having a thermal conductivity at 20°C less than 5 W.m⁻¹.K⁻¹, and
• a temperature probe (68, 69) placed, above the well, on the exterior side of the insulating material in order to insulate thermally this probe from the substrate.

2. Pump according to Claim 1, in which the pump furthermore comprises first and second anti-return valves (50, 60) housed inside the intake and discharge channels, respectively.

3. Pump according to either one of the preceding claims, in which the thickness of the thermally insulating material in the well is larger than 10 µm and strictly smaller than the thickness of the substrate so as to preserve under the well a thickness of at least 100 µm of substrate.

4. Pump according to any one of the preceding claims, in which the side of the substrate containing the well completely encircles the well thus forming a periphery of the well, and the side of the other substrate is joined to this substrate on this periphery of the well.

5. Pump according to any one of the preceding claims, in which the thickness of the thermally insulating material (72) contained in the well is larger than 100 µm.

6. Pump according to any one of the preceding claims, in which the substrate (6) containing the well (66) comprises a layer (118) of at least 10 µm thickness made of a thermally conductive material, and the well is essentially located inside this layer, a thermally conductive material being defined as being a material the thermal conductivity of which at 20°C is higher than 50 W.m⁻¹.K⁻¹.

7. Pump according to Claim 6, in which the layer (118) is made of silicon.

8. Process for fabricating a pump according to any one of the preceding claims, this process comprising:
- providing (86) a first substrate extending essentially in a plane, the first substrate having a side;
- forming (106) a cavity and intake and discharge channels in the side of the first substrate; and
- joining (140) to the side of the first substrate a second substrate having a side closing the channels so as to form tubes inside of which the pumped fluid is able to flow, this second substrate also comprising at least one membrane closing the cavity in order to form a chamber that is leak-tight to the fluid, this membrane being deformable:
• from a suction position to an expulsion position in order to expel the fluid out of the chamber via the discharge channel, and
• from the expulsion position to the suction position in order to suck the fluid into the chamber via the intake channel;
**characterized in that** the process comprises:
- providing an actuator capable of converting the energy that it receives into a movement of the membrane between its suction and expulsion positions,
- forming (124), inside one of the substrates, a well entirely filled with a thermally insulating solid material having an exterior side flush with the interior of the tube or of the chamber, the thermally insulating solid material being a material having a thermal conductivity at 20°C lower than 5 W.m⁻¹.K⁻¹, and
- forming (124) at least one temperature probe entirely placed on the exterior side of the thermally insulating material in order to insulate thermally this probe from the substrate and obtain an assembly for measuring the temperature or flow rate of the fluid.

9. Fabrication process according to Claim 8, in which the thickness of the thermally insulating material filling the well is larger than 10 µm and strictly smaller than the thickness of the substrate so as to preserve under the well a thickness of at least 100 µm of substrate.

10. Process according to Claim 8 or 9, in which, forming the well in the substrate comprises:
- producing (150) a cavity in the side of this substrate;
- adding (152) a rigid sheet of thermally insulating material to the side of this substrate, the sheet thus covering the cavity;
- applying (156) a heat treatment at a temperature above the melting point of the sheet so that the latter melts into the cavity; and
- thinning (158) the melted sheet until the side of the substrate is exposed.

11. Process according to Claim 10, in which the thermally insulating material of the sheet is a borosilicate glass or a silicon oxide glass.

12. Process according to Claim 8, in which forming the well in the substrate comprises:
- providing (116) a substrate comprising a layer made of an oxidizable material, the oxide of this material being a thermally insulating material;
- producing (170) trenches in the side of this substrate of at least 10 µm depth, these trenches bounding pillars in the layer made of oxidizable material of the substrate; and
- oxidizing (174) the pillars right through their thickness, so as to form an oxide that fills the trenches, the oxidized pillars and the oxide-filled trenches then forming the well filled with thermally insulating material.

13. Process according to Claim 8, in which forming the well in the substrate comprises:
- providing (116) a substrate comprising a layer made of an oxidizable material, the oxide of this material being a thermally insulating material; and
- forming (180) a well of at least 10 µm depth filled with the material of the layer but made porous.

14. Process according to Claim 13, in which the process furthermore comprises a step (182) of oxidizing all or some of the porous material so as to fill the pores of this porous material with oxide and so as to oxidize at least partially the walls of this porous material in order to obtain the well filled with thermally insulating material.
